# EUROPÄISCHE PATENTANMELDUNG

(11) **EP 0 538 634 A1**
(43) Veröffentlichungstag der Anmeldung: **28.04.1993**
(21) Anmeldenummer: 92116257.4
(22) Anmeldetag: 23.09.1992
(51) Int. Cl.: G01F 3/06

(54) **Durchfluss-Mengenmesser**

(30) Priorität: 23.10.1991 DE 9113190 U
(71) Anmelder: SMITH METER GmbH, D-25474 Ellerbek (DE)
(72) Erfinder: Hühn, Karl-Heinz, D-2084 Rellingen (DE)
(74) Vertreter: Glawe, Delfs, Moll & Partner

(57) **Zusammenfassung**

Der Durchfluß-Mengenmesser mit einem Rotor (5), mit im Rotor verschiebbar angeordneten Treibschiebern (7), und mit einer Steuerkurve (8) für den Treibschieber (7) zeichnet sich dadurch aus, daß die Steuerkurve (8) im wesentlichen kreisförmig und exzentrisch zum Rotor (5) angeordnet ist.

## Beschreibung

Die Erfindung betrifft einen Durchfluß-Mengenmesser mit einem Rotor, mit im Rotor verschiebbar angeordneten Treibschiebern, und mit einer Steuerkurve für die Treibschieber.

Mit bekannten Durchfluß-Mengenmessern dieser Art können Gas- und Flüssigkeitsströmungen mengenmäßig erfaßt werden. Der Rotor ist exzentrisch in einem Gehäuse angeordnet und liegt an einer Seite am Gehäuse an, so daß hier kein Gas oder keine Flüssigkeit hindurchtreten kann. Auf der anderen Seite weist der Rotor einen Abstand vom Gehäuse auf; der Zwischenraum wird dabei durch die Treibschieber geschlossen, so daß sich der Rotor dreht, wenn das gasförmige oder flüssige Medium durch den Mengenmesser strömt.

Im Bereich der Strömung ist zwischen Rotor und Gehäusewand die Meßkammer vorgesehen, in der in der entsprechenden Stellung des Rotors ein genau definiertes Volumen des Gases oder der Flüssigkeit zwischen zwei Treibschiebern, dem Rotor und der Gehäusewand eingeschlossen ist.

Bisher waren im Bereich der Meßkammer Rotoraußenfläche, Steuerkurve und Gehäuseinnenfläche, die die Meßkammer begrenzen, konzentrisch. Man war davon ausgegangen, daß über die gesamte Meßkammer in Umfangsrichtung überall der gleich Querschnitt vorhanden sein muß, da sonst sich der Rotor des Mengenmessers auch bei gleichförmiger Durchströmung mit dem zu messenden Medium nicht gleichförmig dreht und man daher ungenaue Messungen erhält. Sind im Bereich der Meßkammer Rotor und Gehäusewand konzentrisch, so verschieben sich hier die Treibschieber radial nicht. Sie müssen dann im übrigen Winkelbereich sehr schnell von der vollausgefahrenen Stellung in die Stellung zurückgeschoben werden, in der sie völlig im Rotor verschwinden. Dies bedeutet sehr hohe Beschleunigung der Treibschieber, was die Arbeitsgeschwindigkeit beschränkt. Dies gilt insbesondere dann, wenn viskose Medien gemessen werden sollen.

Die Aufgabe der Erfindung besteht in der Schaffung eines Durchfluß-Mengenmessers der eingangs genannten Art, der einfach aufgebaut ist und mit dem wesentlich höhere Meßgeschwindigkeiten erzielt werden können.

Die erfindungsgemäße Lösung besteht darin, daß die Steuerkurve im wesentlichen kreisförmig und exzentrisch zum Rotor angeordnet ist.

Durch die Erfindung wird also das Vorurteil überwunden, daß die Gehäuseinnenfläche und damit Steuerkurve im Bereich der Meßkammer konzentrisch mit dem Rotor sein muß. Es wird also ganz bewußt von dem Vorurteil abgegangen, daß die Meßkammer in Umfangsrichtung überall gleichen Querschnitt haben muß.

Der Vorteil des erfindungsgemäßen Mengenmessers besteht darin, daß die Treibschieber nur jeweils in der Mitte der Meßkammer voll ausgefahren sind, am Anfang und Ende der Meßkammer aber weniger stark ausgefahren sind. Die Treibschieber müssen daher hinter dem Ende der Meßkammer nur noch einen geringeren Weg in den Rotor zurückverschoben werden und vor der Meßkammer nur um einen geringeren Weg herausgeschoben werden. Dies verringert die Beschleunigungen und ermöglicht höhere Arbeitsgeschwindigkeiten. Waren bei einem konventionellen Mengenmesser nur Drehgeschwindigkeiten von höchstens 400 Umdrehungen pro Minute des Rotors zu erzielen, so kann man mit einem erfindungsgemäßen Mengenmesser, der ungefähr gleiche Abmessungen hat, ungefähr 1000 Umdrehungen pro Minute erreichen.

Obwohl die Steuerkurve auch außerhalb des Rotors angeordnet sein kann, erhält man eine besonders einfache und kompakte Konstruktion, wenn die Steuerkurve im Inneren des Rotors angeordnet ist.

Bei einer vorteilhaften Ausführungsform ist im Bereich der Meßkammer der Krümmungsmittelpunkt der Steuerkurve näher an der Meßkammer angeordnet als der Krümmungsmittelpunkt der die Meßkammer begrenzenden Gehäusefläche. Auf diese Weise wird sichergestellt, daß der Spalt zwischen der Vorderkante des Treibschiebers und der Gehäusewand in der Mitte der Meßkammer jedenfalls nicht größer ist als am Anfang oder Ende der Meßkammer. Durch dieses Merkmal wird aber insbesondere folgender Vorteil erzielt.

Bisher war es notwendig, daß die Treibschieber an ihren Füßen Rollen aufwiesen, mit denen sie aus den Steuerkurven abrollten. Dies verteuerte nicht nur die Konstruktion, sondern setzte auch aus praktischen Gründen der kleinstmöglichen Größe der Mengenmesser unerwünscht hohe Grenzen. Sieht man nun vor, daß wie erwähnt die Krümmungsmittelpunkte nicht zusammenfallen, so können die Treibschieber an der Steuerkurve mit einer im wesentlichen ebenen, sich im wesentlichen tangential zur Steuerkurve erstreckenden Fußfläche anliegen. Diese Füße gleiten dann auf der Steuerkurve, so daß Rollen nicht mehr erforderlich sind. Im Verlauf der Rotation des Rotors liegen die Treibschieber dabei nicht immer mit den Mittelpunkten ihrer Fußflächen an der Steuerkurve auf, was sie weiter nach außen drückt. Trotzdem kann aber über die ganze Meßkammer ein genau definierter konstanter Spalt zwischen Vorderkante der Treibschieber und Gehäusewand erreicht werden, da die Krümmungsmittelpunkte der Steuerkurve und der Gehäuseinnenwand unterschiedlich sind.

Bei einer weiteren vorteilhaften Ausführungsform ist vorgesehen, daß der Mengenmesser ein auf der Steuerscheibe aufgesetztes Zwischenelement aufweist, das senkrecht zur Radialrichtung der Steuerkurve stehende, im wesentlichen ebene Flächen aufweist, an denen je ein Treibschieber mit seiner Fußfläche gleitend anliegt. In diesem Falle gleiten die Treibschieberfüße nicht mehr auf der Steuerkurve, sondern den ebenen Flächen, die für das Gleiten ganz besonders präpariert oder ausgebildet sein können. Ein großflächiges Anliegen der Fußflächen der Treibschieber mit den ebenen Flächen des Zwischenelements erhält man, wenn die Fußflächen der Treibschieber im wesentlichen eben sind.

Die Erfindung wird im folgenden anhand von vorteilhaften Ausführungsformen unter Bezugnahme auf die beigefügten Zeichnungen beschrieben. Es zeigen:
- Fig. 1: in einem Axialschnitt eine erste Ausführungsform der Erfindung;
- Fig. 2: in einem Axialschnitt eine zweite Ausführungsform der Erfindung;
- Fig. 3: in einem Längsschnitt eine dritte Ausführungsform der Erfindung;
- Fig. 4: in einem Axialschnitt eine vierte Ausführungsform der Erfindung; und
- Fig. 5: in einem Axialschnitt einen vorbekannten Messer.

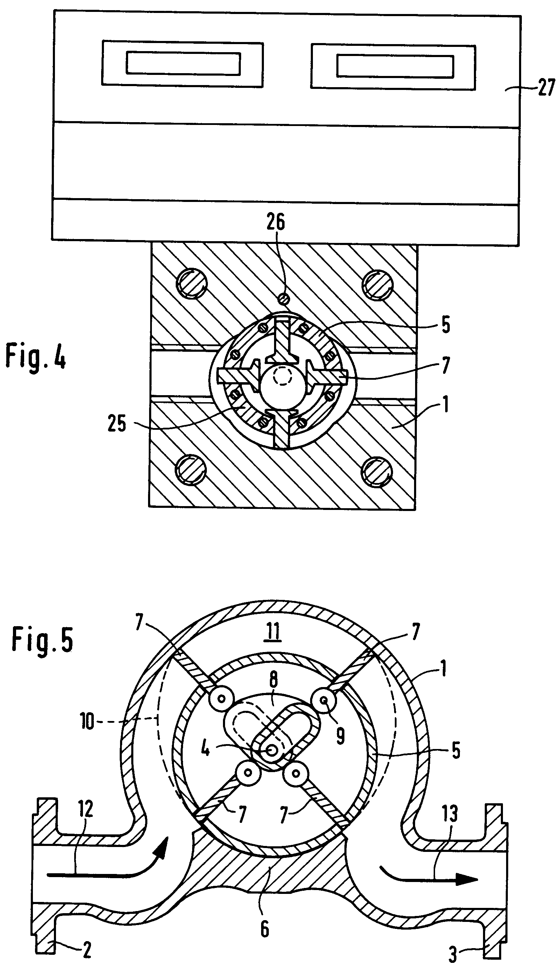

Es soll zunächst anhand der Fig. 5 und eines vorbekannten Durchfluß-Mengenmessers das allgemeine Arbeitsprinzip eines solchen Mengenmessers beschrieben werden. Das Gehäuse 1 des Mengenmessers ist mit einem Einlaß 2 und einem Auslaß 3 versehen. Im Gehäuse 1 ist auf einer Welle 4 ein Rotor 5 gelagert. Dieser Rotor liegt an einem Gehäusevorsprung 6 an, was auch durch exzentrische Lagerung des Rotors 5 erreicht werden kann. Hier liegt der Rotor 5 dichtend gegen das Gehäuse an, so daß hier keine Flüssigkeit hindurchtreten kann. Im Rotor 5 sind zwei Paare von Treibschiebern 7 vorgesehen, von denen je zwei gegenüberliegende miteinander verbunden sind. Im Inneren des Rotors befindet sich eine Steuerkurve 8, auf der Rollen 9 der Treibschieber 7 abrollen. Dadurch wird z.B. der in Fig. 5 links oben dargestellte Treibschieber, wenn sich der Rotor im Uhrzeigersinn dreht, nach außen gedrückt und gleichzeitig der rechts unten befindliche Treibschieber nach innen gezogen. Insgesamt durchlaufen die Vorderkanten der Treibschieber eine Kurve, die bei 10 gestrichelt dargestellt ist. Im oberen Bereich befindet sich die Meßkammer 11, bei der das dort eingeschlossene Volumen auf beiden Seiten von Treibschiebern fest eingeschlossen ist. Der Rotor 5 dreht sich, wenn das Gas oder die Flüssigkeit in Richtung des Pfeils 12 hineinströmt und in Richtung des Pfeils 13 herausströmt. Aus der Zahl der Umdrehungen kann dann die Durchflußmenge bestimmt werden.

Beim vorbekannten Mengenmesser der Fig. 5 ist die Steuerkurve 8 im Bereich der Meßkammer 11 konzentrisch mit dem Rotor 5 und der Gehäusewand. Die Treibschieber müssen dann über verhältnismäßig kleine Winkelbereiche (bei der Ausführungsform der Fig. 5 über ungefähr 90°) aus der voll ausgefahrenen in die voll zurückgezogene Stellung bewegt werden, was hohe Beschleunigungen und Flächenpressungen bedeutet, wodurch die Arbeitsgeschwindigkeit des Mengenmessers begrenzt wird.

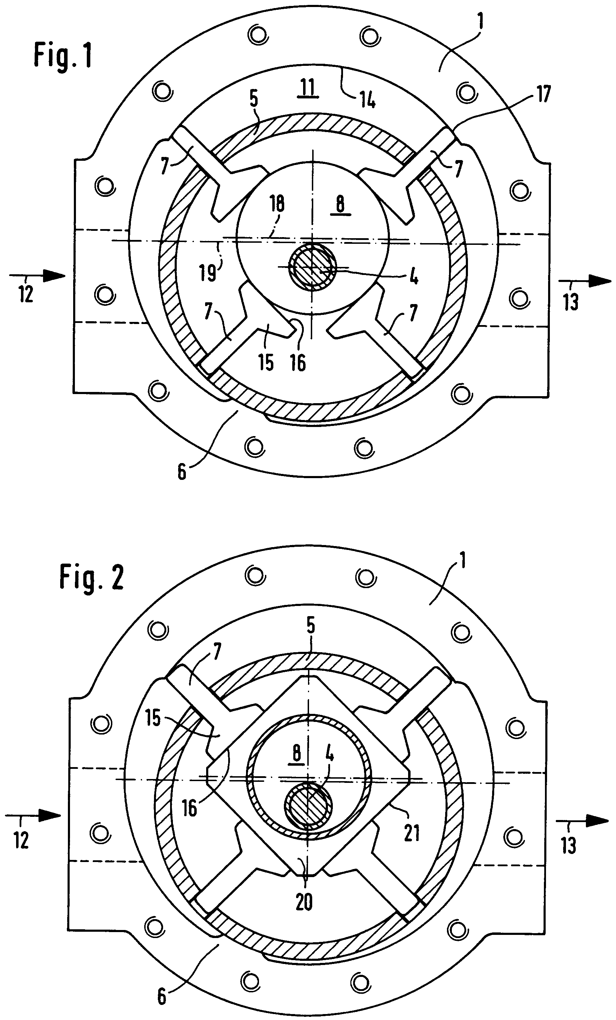

Beim erfindungsgemäßen Durchfluß-Mengenmesser der Fig. 1 ist nun die Steuerkurve im wesentlichen kreisförmig und exzentrisch zur Welle 4 des Rotors angeordnet. Auch die Innenfläche 14 des Gehäuses 1 im Bereich der Meßkammer 11 ist nicht mehr mit dem Rotor 5 konzentrisch. Aufgrund dieser Tatsache sind die Treibschieber 7 nur in der Mitte der Meßkammer 11 am weitesten ausgefahren, befinden sich aber am vorderen und hinteren Ende der Meßkammer 11 bereits in einer weiter nach innen gerichteten Stellung, so daß sie über den Restwinkelbereich mit geringeren Beschleunigungen in den Rotor eingezogen bzw. aus demselben wieder herausgeschoben werden können. Bei der Ausführungsform der Fig. 1 liegen die Treibschieber 7 nicht mehr mit Rollen an der Steuerkurve 8 an, sondern mit Füßen 15, die eine ebene Fußfläche 16 haben, die senkrecht zur Radialrichtung der Steuerkurve 8 steht. Dadurch befinden sich die Treibschieber in den in Fig. 1 gezeigten 45°-Stellungen ein wenig weiter außerhalb, als sie dies in der Mitte der Meßkammer tun würden. Damit trotzdem über die gesamte Meßkammer 11 die Spaltbreite zwischen Innenfläche 14 des Gehäuses und Vorderkante 17 der Treibschieber konstant ist, ist im Bereich der Meßkammer 11 der Krümmungsmittelpunkt der Steuerkurve 8 auf der Linie 18 und damit näher an der Meßkammer 11 angeordnet als der Krümmungsmittelpunkt der die Meßkammer 11 begrenzenden Gehäusefläche 14, der auf der Linie 19 liegt.

Die Ausführungsform der Fig. 2 ist im wesentlichen gleich aufgebaut wie diejenige der Fig. 1. Der wesentliche Unterschied besteht darin, daß die Treibschieber 7 mit ihren Füßen 15 und ihren ebenen Flußflächen 16 nicht mehr an der Steuerkurve 8 anliegen, sondern an einem Zwischenelement 20, das auf der Steuerkurve 8 rotieren kann. Dieses Zwischenelement weist ebene Flächen 21 auf, wobei für jeden Treibschieber 7 eine solche ebene Fläche 21 vorgesehen ist. Auf diesen ebenen Flächen 21 sind die Treibschieber 7 mit ihren Füßen 17 bzw. Fußflächen 16 seitlich verschiebbar angeordnet. Der Vorteil dieser Anordnung ist eine verschleißfeste Treibschieberführung insbesondere für größere Nennweiten.

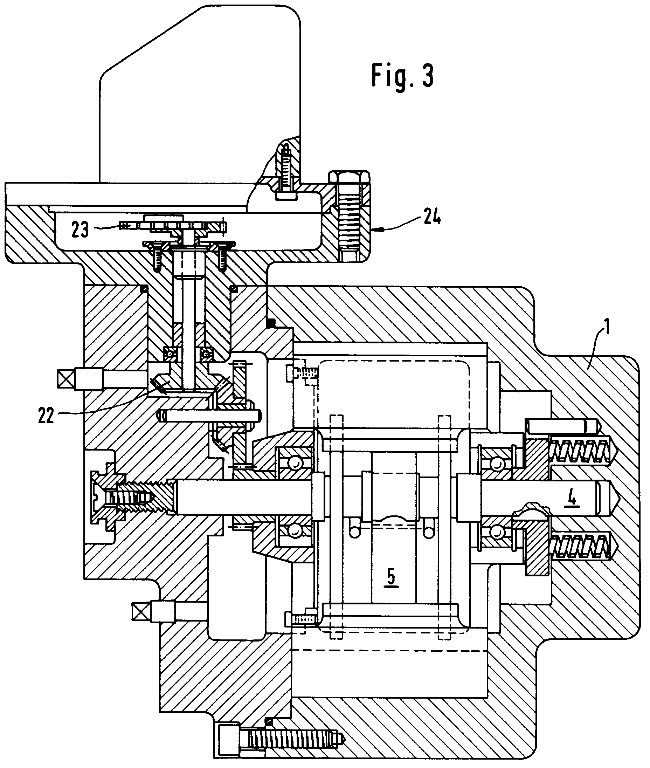

Wie dies in Fig. 3 gezeigt ist, kann die Umdrehungszahl des Rotors 5 über ein Getriebe 22 und ein Justiergetriebe 23 auf einen Zähler 24 übertragen werden. Mit Hilfe des Justiergetriebes erfolgt die Eichung des Mengenmessers.

Bei der Ausführungsform der Fig. 4 wird die Übertragung der Rotorumdrehungen mittels eines Wiegand-Sensors vorgenommen. Es sind im Rotor 5 Magnete 25 vorgesehen, die bei entsprechender Umdrehung je nach Zahl der Magnete an dem Wiegand-Sensor 26 Impulse erzeugen, die ein Maß für die durch den Mengenmesser geflossenen Gas- oder Flüssigkeitsmengen sind und die auf ein geeignetes elektronisches Anzeigegerät 27 übertragen werden können.

## Patentansprüche

1. Durchfluß-Mengenmesser mit einem Rotor (5), mit im Rotor (5) verschiebbar angeordneten Treibschiebern (7), und mit einer Steuerkurve für die Treibschieber (7), dadurch gekennzeichnet, daß die Steuerkurve (8) im wesentlichen kreisförmig und exzentrisch zum Rotor (5) angeordnet ist.

2. Durchfluß-Mengenmesser nach Anspruch 1, dadurch gekennzeichnet, daß die Steuerkurve (8) im Inneren des Rotors (5) angeordnet ist.

3. Durchfluß-Mengenmesser nach Anspruch 1 oder 2, dadurch gekennzeichnet, daß im Bereich der Meßkammer (11) der Krümmungsmittelpunkt der Steuerkurve (8) näher an der Meßkammer (11) angeordnet ist als der Krümmungsmittelpunkt der die Meßkammer (11) begrenzenden Gehäusefläche (14).

4. Durchfluß-Mengenmesser nach Anspruch 3, dadurch gekennzeichnet, daß die Treibschieber (7) an der Steuerkurve (8) mit einer im wesentlichen ebenen, sich im wesentlichen tangential zur Steuerkurve (8) erstreckenden Fußfläche (16) anliegen.

5. Durchfluß-Mengenmesser nach Anspruch 3, dadurch gekennzeichnet, daß er ein auf der Steuerkurve (8) aufgesetztes Zwischenelement (20) aufweist, das senkrecht zur Radialrichtung der Steuerkurve (8) stehende, im wesentlichen ebene Flächen (21) aufweist, an denen je ein Treibschieber (7) mit seiner Fußfläche (16) gleitend anliegt.

6. Durchfluß-Mengenmesser nach Anspruch 5, dadurch gekennzeichnet, daß die Fußflächen (16) der Treibschieber (7) im wesentlichen eben sind.
